# EUROPÄISCHE PATENTSCHRIFT

(11) **EP 2 562 019 B1**
(45) Veröffentlichungstag und Bekanntmachung des Hinweises auf die Patenterteilung: **22.03.2017**
(21) Anmeldenummer: 12180589.9
(22) Anmeldetag: 15.08.2012
(51) Int. Cl.: B60J 7/00, B60J 7/057, B60J 7/043

(54) **Dachfenstereinheit für ein Kraftfahrzeug und Kraftfahrzeug mit solch einer Einheit**
Roof window unit for motor vehicle and motor vehicle with such a unit
Ensemble de fenêtre de toit pour un véhicule automobile et véhicule automobile avec un tel ensemble

(30) Priorität: 25.08.2011 DE 102011081592
(43) Veröffentlichungstag der Anmeldung: 27.02.2013
(73) Patentinhaber: BOS GmbH & Co. KG, 73760 Ostfildern (DE)
(72) Erfinder: Hansen, Melf, 75053 Gondelsheim (DE)
(74) Vertreter: Patentanwälte Ruff, Wilhelm, Beier, Dauster & Partner mbB

(56) Entgegenhaltungen:
- EP-A1- 1 588 882
- DE-A1- 19 812 528
- DE-A1-102004 063 466
- DE-B3-102009 041 903
- DE-T2-602004 011 473
- US-A- 5 188 420
- US-A1- 2011 187 162

## Beschreibung

### Anwendungsgebiet und Stand der Technik

Die Erfindung betrifft eine Dachfenstereinheit für ein Kraftfahrzeug mit einer Basisbaueinheit zur ortsfesten Anordnung am Chassis des Kraftfahrzeugs, mit einem gegenüber der Basisbaueinheit durch zwei Deckelführungsschienen der Basisbaueinheit geführten Deckel, der zwischen einer Schließstellung und einer Öffnungsstellung verlagerbar ist, und mit einem gegenüber der Basisbaueinheit durch zwei Abschattungsführungsschiene geführten Abschattungselement, das zwischen einer Funktionsstellung und einer Staustellung verlagerbar ist. Die Erfindung betrifft weiterhin auch ein Kraftfahrzeug mit einer solchen Dachfenstereinheit.

Eine gattungsgemäße Dachfenstereinheit, wie aus DE 10 2004 063 466, ist in modernen Kraftfahrzeugen nicht unüblich. Das Chassis solcher Fahrzeuge umfasst eine Aussparung im Dachbereich, die durch den genannten Deckel verschließbar ist. Da dieser Deckel häufig zumeist teilweise verglast und somit lichtdurchlässig ausgebildet ist und da bei vielen Gestaltungen zusätzlich zum Deckel benachbarte Teile des Fahrzeugdachs ebenfalls mit Glasscheiben und somit transparent ausgebildet sind, ist bei gattungsgemäßen Dachfenstereinheiten zusätzlich ein Abschattungselement vorgesehen, welches dafür ausgebildet ist, die in den Fahrgastinnenraum eindringende Sonneneinstrahlung zu vermindern.

Gattungsgemäße Dachfenstereinheiten sind aus dem Stand der Technik in einer Variante bekannt, bei der statt einer manuellen Handhabung eine elektrische Betätigung vorgesehen ist. Da getrennte Bewegungsmöglichkeiten des Abschattungselements und des Deckels vorgesehen sein müssen, um bei geschlossenem Deckel sowohl eine Anordnung des Abschattungselements in der Funktionsstellung als auch in der Staustellung zu gestatten und um bei Anordnung des Abschattungselements in der Staustellung sowohl die Anordnung des Deckels in seiner Schließstellung oder seiner Öffnungsstellung zu gestatten, sind bei vielen der bekannten Dachfenstereinheiten zwei getrennte Antriebe vorgesehen, die durch eine Steuereinrichtung gesteuert isoliert zur Bewegung des Deckels einerseits und des Abschattungselements andererseits ausgebildet sind. Die Notwendigkeit, zwei Motoren vorsehen zu müssen, führt jedoch zu einem vergleichsweise hohen Preis der Dachfenstereinheit.

### Aufgabe und Lösung

Aufgabe der Erfindung ist es, eine gattungsgemäße Dachfenstereinheit dahingehend weiterzubilden, dass diese mit einem vergleichsweise günstigen Antriebssystem ausgestattet sein kann, welches die gewünschten Funktionen und Konfigurationen der Dachfenstereinheit gestattet.

Erfindungsgemäß wird dies dadurch erzielt, dass zur Verlagerung des Deckels zwischen der Schließstellung und der Öffnungsstellung und zur Verlagerung des Abdeckungselements zwischen der Funktionsstellung und der Staustellung ein gemeinsamer Antriebsmotor vorgesehen ist.

Weiterhin ist erfindungsgemäß in der Deckelführungsschiene ein Deckelstrang zur Bewegung des Deckels und in der Abschattungsführungsschiene ein Abschattungsstrang zur Bewegung des Abschattungselements vorgesehen. Dabei sind der Deckelstrang und der Abschattungsstrang derart permanent mit dem gemeinsamen Antriebsmotor gekoppelt, dass sie durch diesen Antriebsmotor gleichzeitig, jedoch mit unterschiedlichen Geschwindigkeiten, angetrieben werden.

Eine Dachfenstereinheit im Sinne der Erfindung umfasst all jene funktional mit dem Dachfenster eines Kraftfahrzeugs im Zusammenhang stehenden mechanischen Komponenten, ohne dass es auf deren Gestaltung als isoliert handhabbare Baueinheit ankommt. Der Deckel und das Abschattungselement sind jeweils durch Führungsschienen geführt, wobei die Verwendung der beiden Begriffe der Deckelführungsschienen und der Abschattungsführungsschienen nicht dahingehend zu verstehen ist, dass es sich zwingend um getrennte Schienen handelt. So können Schienenbauteile Verwendung finden, die sowohl eine Abschattungsführung als auch eine Deckelführung zur Verfügung stellen. Es sind sogar Schienenbauteile denkbar und erfindungsgemäß nutzbar, bei denen die Deckelführungsschiene und die Abschattungsführungsschiene durch die gleiche Nut innerhalb eines Schienenbauteils gebildet werden.

Der Deckel ist zwischen der Schließstellung und der Öffnungsstellung verlagerbar, wobei unter der Schließstellung jene Stellung zu verstehen ist, in der eine Ausnehmung im Dach des Kraftfahrzeugs durch den Deckel vollständig verschlossen ist, während die Öffnungsstellung jene Stellung ist, in der Deckel soweit als möglich von der Schließstellung beabstandet ist. Die Funktionsstellung des Abdeckungselements ist jene Stellung, in der dieses den Deckel und gegebenenfalls anderweitige Glasflächen im Fahrzeugdach soweit als möglich überspannt, während die Staustellung jene Stellung ist, in der die Glasfläche im Fahrzeugdach nicht oder nur geringfügig vom Abschattungselement überdeckt ist.

Bei einer erfindungsgemäßen Gestaltung einer Dachfenstereinheit sind zwei getrennte Stränge vorgesehen, wobei es sich vorzugsweise um biegbare Stränge und insbesondere vorzugsweise um zur Übertragung von Schubkräften geeignete Stränge handelt. Derartige Stränge sind beispielsweise unter dem Markennamen Suflex am Markt erhältlich. Diese beiden Stränge, von denen einer der Bewegung des Deckels und der andere der Bewegung des Abschattungselements dient, sind permanent zumindest mittelbar mit dem Antriebsmotor gekoppelt, so dass eine Bewegung der Abtriebswelle des Antriebsmotors stets auch eine Bewegung beider Stränge bewirkt. Auf eine schaltbare Kupplung zur isolierten Bewegung jeweils eines der Stränge kann somit verzichtet werden. Um die stets gleichzeitig stattfindende Bewegung der Stränge besonders vorteilhaft für eine Dachfenstereinheit nutzen zu können, ist vorgesehen, dass die Stränge sich mit unterschiedlichen Geschwindigkeiten bewegen. So kann beispielsweise der Deckelstrang mit geringerer, beispielsweise halber Geschwindigkeit des Abschattungsstranges bewegt werden. Die unterschiedlichen Geschwindigkeiten werden durch ein mechanisches Übersetzungs- oder Untersetzungsgetriebe bewirkt, wobei auch die zur Herstellung unterschiedlicher Geschwindigkeiten ausgebildete Kopplung der Stränge an den Motor als Getriebe in diesem Sinne verstanden werden. Durch diese unterschiedlichen Geschwindigkeiten kann zum einen besonders vorteilhaft der Tatsache Rechnung getragen werden, dass bei manchen Gestaltungen von Dachfenstereinheiten die Bewegungsstrecken des Deckels und des Abschattungselements nicht übereinstimmen. So kann insbesondere vorgesehen sein, dass durch die höhere Geschwindigkeit des Abschattungsstrangs eine besonders weite Bewegung des Abschattungselements verursacht wird, durch die dieses zwischen einer Staustellung und einer Funktionsstellung verlagert wird, wobei es in der Funktionsstellung nicht nur die Glasscheibe des Deckels sondern auch eine hierzu benachbarte Glasscheibe im Dachfenster überspannt. Wichtiger noch als die Möglichkeit, das Abschattungselement und den Deckel verschiedene Strecken zurücklegen zu lassen, ist jedoch der Vorteil, dass durch die unterschiedlichen Geschwindigkeiten der Stränge asynchrone Bewegungen des Deckels und des Abschattungselements vorteilhaft realisiert werden können. Dies wird im Weiteren noch erläutert.

Was die Anbindung des Deckelstrangs und des Abschattungsstrangs an den Motor angeht, so ist es besonders bevorzugt, wenn beide Stränge jeweils unmittelbar durch eine gemeinsame Abtriebswelle des Motors oder eines damit verbundenen Getriebes angetrieben werden. Somit erfolgt das Antreiben des Deckelstrangs nicht mittelbar über den Abschattungsstrang und das Antreiben des Abschattungsstrangs nicht mittelbar über den Deckelstrang. Stattdessen sind beide unmittelbar mit einer vom Motor angetriebene Abtriebswelle gekoppelt. Zur Kraftübertragung von dieser Abtriebswelle auf die Stränge ist es besonders vorteilhat, wenn der Deckelstrang und der Abschattungsstrang in Art der bereits genannten Suflex-Wellen jeweils als Stränge mit Außenverzahnung ausgebildet sind. Diese können mit zwei an der Abtriebswelle vorgesehenen Zahnrädern verschiedenen Durchmessers kämmen. So wird eine sehr einfach Möglichkeit geschaffen, die verschiedenen Geschwindigkeiten der beiden Stränge herzustellen. Jener Strang, der von dem Zahnrad geringeren Durchmessers angetrieben wird, wird zwangsläufig auch langsamer bewegt. Neben einer solchen unmittelbaren Anbindung beider Stränge an die Abtriebswelle sind jedoch auch Gestaltungen denkbarbar, bei denen nur ein Strang unmittelbar von der Abtriebswelle des Motors oder eines damit verbundenen Getriebes angetrieben wird, während der andere Strang mittelbar über den ersten Strang durch ein zwischen den beiden wirksames Übersetzungsgetriebe oder Untersetzungsgetriebe angetrieben wird. Eine solche Gestaltung kann beispielsweise bei besonders begrenztem Bauraum zu einer größeren Flexibilität hinsichtlich der Anordnung der Stränge führen.

Wie bereits erwähnt wurde, sind die unterschiedlichen Geschwindigkeiten der Stränge insbesondere in Verbindung mit der Erzielung einer asynchronen Bewegung des Deckels und des Abschattungselements von Vorteil. Hierfür ist es insbesondere vorteilhaft, wenn eine erste Kopplungseinrichtung vorgesehen ist, die abhängig von der Position des Deckelstrangs eine Koppelung zwischen dem Deckelelement und dem Deckelstrang herstellt oder aufhebt. In ähnlicherweise kann es vorteilhaft sein, dass eine zweite Kopplungseinrichtung vorgesehen ist, die abhängig von der Position des Abschattungsstrangs eine Koppelung zwischen dem Abschattungselement und dem Abschattungsstrang herstellt oder aufhebt.

Die genannten Gestaltungen mit erster und/oder zweiter Kopplungseinrichtung gestatten es, den Deckel bzw. das Abschattungselement erst dann an den korrespondierenden Strang anzukoppeln, wenn dies im Sinne des ganzheitlichen Bewegungsablaufs erforderlich wird. Vor der Herstellung des Kopplungszustandes bzw. nach der Aufhebung des Kopplungszustandes bewegt sich der jeweilige Strang ohne dabei den Deckel bzw. das Abschattungselement mitzuführen.

Diese Gestaltung mit erster und/oder zweiter Kopplungseinrichtung gestattet einen besonders vorteilhaften Ablauf. Dieser wird erzielt, wenn die erste und die zweite Kopplungseinrichtung derart auf die Bewegungskopplung des Deckelstrangs und des Abschattungsstrangs zueinander angepasst sind, dass ausgehend von einer Ausgangslage, in der sich der Deckel im Schließzustand und das Abschattungselement im Funktionszustand befindet, eine Bestromung des Antriebsmotors einen Ablauf verursacht, in dessen erster Phase das Abschattungselement an den Abschattungsstrang angekoppelt ist, während der Deckel nicht an dem Deckelstrang angekoppelt ist, so dass das Abschattungselement in Richtung seiner Staustellung verlagert wird, während der Deckel in seiner Schließstellung verbleibt, und in dessen zweiter Phase der Deckel an den Deckelstrang angekoppelt ist, so dass der Deckel in Richtung seines Öffnungszustandes verlagert wird.

Somit wird ein Ablauf erzielt, der den praktischen Bedürfnissen entspricht und insbesondere drei Hauptzustände zulässt, nämlich den oben beschriebenen Zustand der Ausgangslage, den Zustand des geschlossenen Deckels bei Anordnung des Abschaltungselements im Stauzustand und den Zustand des geöffneten Deckels bei Anordnung des Abschattungselements im Stauzustand.

Die beiden genannten Phasen sind nicht zwingend die einzigen und unmittelbar zeitlich einander folgenden Phasen. Stattdessen sind auch sowohl Gestaltungen denkbar, bei denen in einer Zwischenphase zwischen den beiden genannten Phasen sowohl das Abschattungselement als auch der Deckel bewegt werden, als auch eine Zwischenphase, in der bei bewegtem Abschattungsstrang und bewegtem Deckelstrang weder das Abschattungselement noch der Deckel bewegt wird.

Die Kopplungseinrichtungen können in verschiedener Weise ausgestaltet sein. Eine besonders einfache Form der Kopplungseinrichtung umfasst lediglich einen an Deckelstrang und/oder insbesondere am Abschattungsstrang angeordneten verlagerbaren Anschlag, der den Deckel oder das Abschattungselement gegen eine anderweitig aufgebrachte Federkraft verlagert. Dies bietet sich insbesondere zur Verlagerung eines Abdeckungselements an, welches als Rollo ausgestaltet ist und gegen die Kraft einer Wickelfeder von einer Wickelwelle abgewickelt ist. Bei einem solchen als Rollo ausgebildeten Abschattungselement kann bei entsprechender Ausgestaltung der Kopplungseinrichtung der Kopplungszustand mit der als Anschlag ausgebildeten Kopplungseinrichtung solange gegeben sein, solange die externe Federkraft wirkt, beim Rollo also so lange, bis dieses vollständig auf der Wickelwelle aufgewickelt ist oder gegen eine diesbezüglichen Endanschlag gelaufen ist.

Eine bevorzugte Ausgestaltung der ersten und/oder zweiten Kopplungseinrichtung sieht jedoch vor, dass diese sowohl Zugkräfte als auch Druckkräfte vom jeweiligen Strang auf das Abschattungselement bzw. den Deckel ausüben kann. Hierfür kann insbesondere ein Kopplungseinrichtung vorgesehen sein, die einen entlang der jeweiligen Führungsschiene geführt beweglichen Kopplungsschlitten aufweist, ein ebenfalls entlang der jeweiligen Führungsschiene geführt bewegliches und am Kopplungsschlitten ankoppelbares Mitnehmerteil aufweist und eine Vorrichtung in oder an der jeweiligen Führungsschiene aufweist, an der beim gemeinsamen Überfahren durch Kopplungsschlitten und Mitnehmerteil eine Kopplung bzw. Entkopplung stattfindet.

Eine solche Kopplungseinrichtung ist demnach so ausgebildet, dass das Mitnehmehrteil, welches mit dem Deckel oder dem Abschattungselement verbunden ist, an dem stets mit dem jeweiligen Strang mitgeführten Kopplungsschlitten ankoppelbar ist, wobei diese Kopplung bzw. Entkopplung in Abhängigkeit der jeweiligen Bewegungsrichtung an einem vorgegebenen Ort der Führungsschiene stattfindet. Eine derartige Kopplungseinrichtung ist beispielsweise aus der DE 10 2009 041 903 B3 bekannt, deren diesbezügliche Offenbarung hiermit explizit in diese Offenbarung einbezogen wird.

Der Vorteil einer solchen Kopplungseinrichtung, die positionsabhängig koppelt und entkoppelt, ist, dass hierdurch auf einfache Weise eine Kopplung erzeugt werden kann die eine Bewegung des Deckels bzw. des Abschattungselements in bidirektionaler Weise durch den jeweiligen Strang gestattet. Bei der an der Führungsschiene vorgesehenen Teilvorrichtung handelt es sich entsprechend der oben genannten referenzierten Schrift vorzugsweise um eine seitliche Aussparung in der Führungsschiene, in die ein Kopplungsteil des Mitnehmers zum Entkoppeln vom Kopplungsschlitten einrückt.

Besonders von Vorteil ist die Nutzung einer erfindungsgemäßen Dachfenstereinheit bei Gestaltungen, bei denen der Deckel zwischen seiner Schließstellung und seiner Öffnungsstellung um eine erste Strecke L1 verlagert wird, die kürzer als jene zweite Strecke L2 ist, um die das Abschattungselement zwischen seiner Funktionsstellung und Staustellung verlagert wird. In einem solchen Fall ist vorgesehen, dass der Deckelstrang langsamer als der Abschattungsstrang vom Antriebsmotor angetrieben wird.

Eine entsprechende Dachfenstereinheit weist in der oben bereits erläuterten Weise ein Abschattungselement auf, welches über eine größere Strecke als der Deckel verlagert wird, so dass das Abschattungselement neben der durch den Deckel bereitgestellten Glasfläche auch eine im Schließzustand des Deckels dem Deckel benachbarte Glasfläche überspannen kann.

Bei dem Abschattungselement sind mehrere Gestaltungen denkbar. So kann beispielsweise ein mit einer starren Platte oder einer Mehrzahl starrer Platten ausgerüstetes Abschattungselement Verwendung finden. Auch ist in der bereits angedeuteten Weise die Verwendung einer Abschattungsrollobahn eines Rollosystems als Abschattungselement von Vorteil. Im Falle einer solchen Abschattungsrollobahn erfolgt die Kraftbeaufschlagung der Rollobahn durch den Abschattungsstrang vorzugsweise an einer zur Rollobahn gehörigen Auszugsstange, die der Wickelwelle entgegengesetzt angeordnet ist.

Die Erfindung betrifft weiterhin noch ein Kraftfahrzeug mit einer Dachfenstereinheit, wobei diese nach oben beschriebener Art ausgebildet ist.

### Kurzbeschreibung der Zeichnungen

Weitere Vorteile und Aspekte der Erfindung ergeben sich außer aus den Ansprüchen auch aus dem nachfolgend erläuterten Ausführungsbeispiel, welches anhand der Figuren detailliert beschrieben ist. Dabei zeigen:
- Fig. 1: ein erfindungsgemäßes Kraftfahrzeug mit einer erfindungsgemäßen Dachfenstereinheit,
- Fig. 2: die Dachfenstereinheit des Fahrzeugs der Fig. 1 in einem Ausgangszustand mit geschlossenem Deckel und bei Anordnung eines Abschattungsrollos in dessen Funktionsstellung und
- Fig. 3 bis 5: den Übergang von der Ausgangsstellung der Fig. 2 in die Endstellung der Fig. 5, in der der Deckel seine Öffnungsstellung eingenommen hat und das Abschattungsrollo sich im Stauzustand befindet, wobei die Fig. 4a bis 4c das Kopplungsverhalten einer Kopplungseinrichtung verdeutlichen.

### Detaillierte Beschreibung der Ausführungsbeispiele

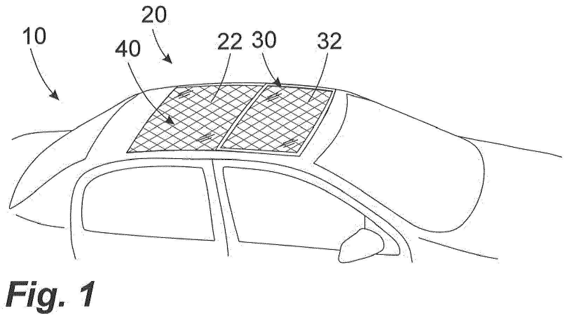

Fig. 1 zeigt ein erfindungsgemäßes Kraftfahrzeug 10, welches über eine erfindungsgemäße Dachfenstereinheit 20 verfügt. Diese Dachfenstereinheit 20 weist zwei Glasflächen 22, 32 auf, die den Lichteinfall von oben in den Fahrzeuginnenraum gestatten. Dabei ist die hintere Glasfläche 22 unbeweglich im Fahrzeugdach angeordnet, während die vordere Glasfläche 32 Teil eines Deckels 30 ist, welcher ausgehend vom Zustand der Fig. 1 in Fahrzeuglängsrichtung nach hinten verlagerbar ist. Unterhalb der Glasflächen 22, 32 ist ein Abschattungselement 40 in Form eines Abschattungsrollos vorgesehen.

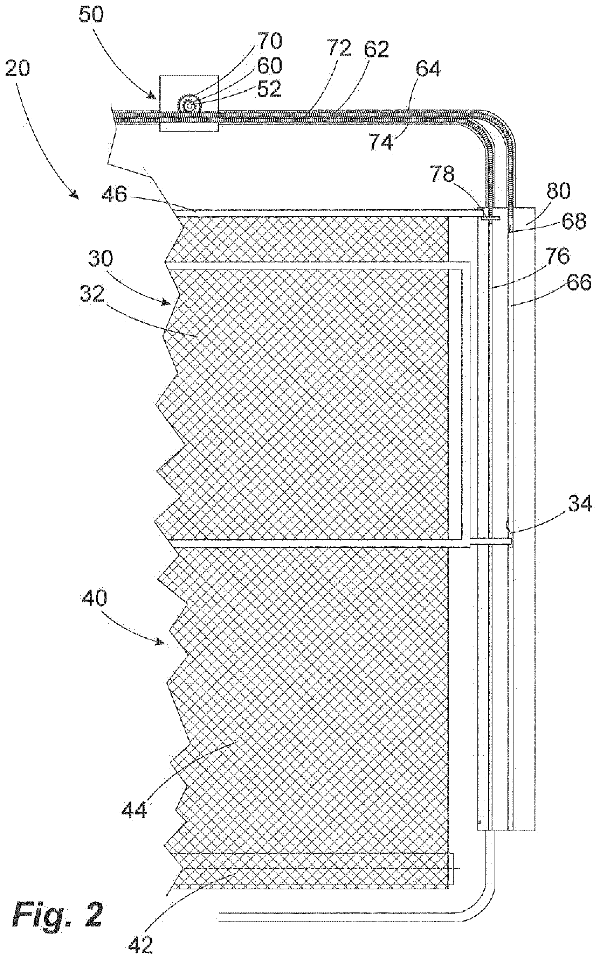

Die Funktionsweise der Dachfenstereinheit 20 wird anhand der Fig. 2 bis 5 erläutert, in denen die Dachfenstereinheit 20 in schematischer Art und Weise von oben dargestellt ist. Dabei zeigen die Fig. 2 bis 5 schwerpunktartig die rechte Seite der Dachfenstereinheit, wobei die gegenüberliegende linke Seite mit nachfolgend noch erläuterten geringfügigen Unterschieden im Wesentlichen baugleich hierzu ist.

Bezugnehmend auf Fig. 2 umfasst die Dachfenstereinheit 20 den bereits genannten Deckel 30 mit der hier drin vorgesehenen Glasscheibe 32. Umfasst ist weiterhin das bereits genannte Abschattungsrollo 40. Dieses verfügt über eine heckseitige Wickelwelle 42, die zur aufgewickelten Aufnahme eines Flächengebildes 44 vorgesehen ist, an dessen distalem Ende eine Auszugstange 46 angeordnet ist. In nicht näher dargestellter, jedoch allgemein bekannter Weise ist die Wickelwelle 42 permanent durch eine Wickelfeder momentenbeaufschlagt, so dass sie eine in Richtung der Wickelwelle 42 wirkende Zugkraft auf das Flächengebilde 44 und die Auszugstange 46 ausübt.

Zur Verlagerung des Deckels 30 und des Flächengebildes 44 ist ein als Elektromotor ausgebildeter Antriebsmotor 50 vorgesehen. Dieser weist eine Abtriebswelle 52 mit zwei darauf drehfest aufgesetzten Antriebszahnrädern 60, 70 auf, wobei das Zahnrad 70 über die doppelte Zähnezahl verglichen mit dem Zahnrad 60 verfügt. Die Zahnräder 60, 70 sind im permanenten Eingriff mit als Suflex-Wellen ausgebildeten Strängen, nämlich einem Abschattungsstrang 72 und einem Deckelstrang 62. Aufgrund der unterschiedlichen Zähnezahl der Zahnräder 60, 70 führt ein Drehen der Abtriebswelle 52 dazu, dass beide Stränge 62, 72 gemeinsam bewegt werden, wobei die Bewegungsgeschwindigkeit des Strangs 72 jedoch doppelt so groß ist wie die Bewegungsgeschwindigkeit des Strangs 62. Die beiden Stränge 62, 72 sind durch Führungsrohre 64, 74 bis zu einer Führungsschieneneinheit 80 geführt, welche sich in Fahrzeugslängsrichtung erstreckt und zwei Führungskanäle 66, 76 zur Führung der Stränge 62, 72 aufweist.

Beiden Strängen sind Kopplungseinrichtungen 68, 82, 78 zugeordnet. Die Kopplungseinrichtung 78 ist dabei als mitbewegter Anschlag 78 am Ende des Strangs 72 vorgesehen. Die Kopplungseinrichtung 68, 82 des Strangs 62 ist mehrteilig und verfügt über einen mitbewegten Kopplungsschlitten 68 und eine ortsfeste Aussparung 82 in der Führungsschiene 66. Die Funktionsweise der Kopplungseinrichtungen wird im Weiteren noch erläutert.

Wie bereits erwähnt, zeigt Fig. 2 einen Ausgangszustand, in welchem der Deckel 30 seine Schließstellung einnimmt und das Abschattungsrollo 40 in seiner Funktionsstellung ist. Ausgehend hiervon kann durch Bestromung des Motors 50 erreicht werden, dass die beiden Stränge 62, 72 bezogen auf die Darstellung der Fig. 2 nach rechts bzw. nach unten verlagert werden.

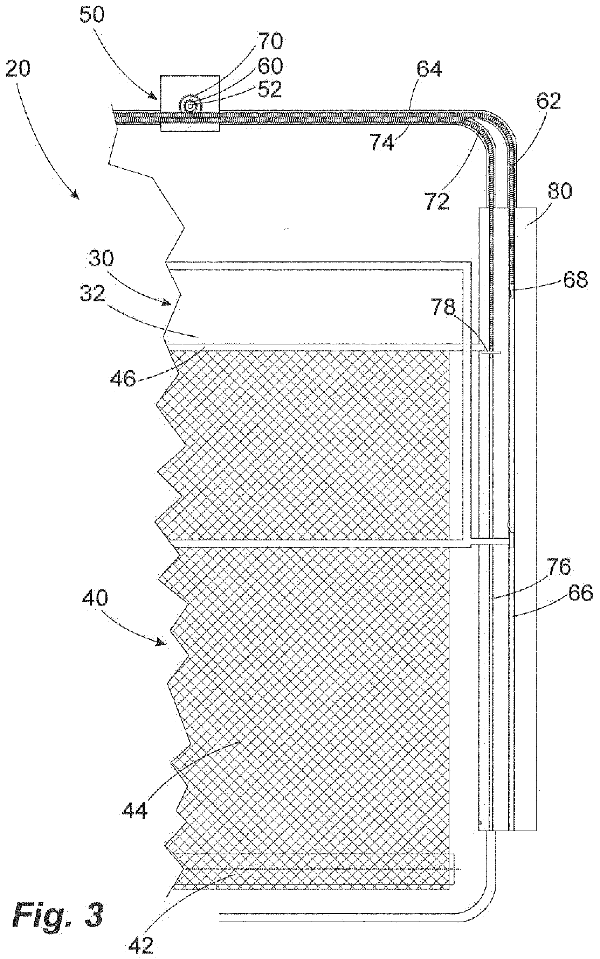

Wie die Darstellung der Fig. 3 zeigt, erfolgt diese Bewegung mit den bereits erläuterten unterschiedlichen Geschwindigkeiten. Zudem bewirkt zunächst nur die Verlagerung des Abschattungsstrangs 72 einen von außen erkennbaren Effekt, nämlich das Aufwickeln des Flächengebildes 44 des Abschattungsrollos 40. Dies wird durch den Kopplungszustand bewirkt, der zwischen der Auszugstange 46 und der Kopplungseinrichtung 78 herrscht. Da die Auszugstange 46 durch die Wickelfeder innerhalb der Wickelwelle 42 bezogen auf die Darstellungen nach unten kraftbeaufschlagt wird, folgt die Auszugsstange 46 der als einfacher beweglicher Anschlag ausgebildeten Kopplungseinrichtung 78. Eine Bewegung des Deckels 30 erfolgt zunächst nicht.

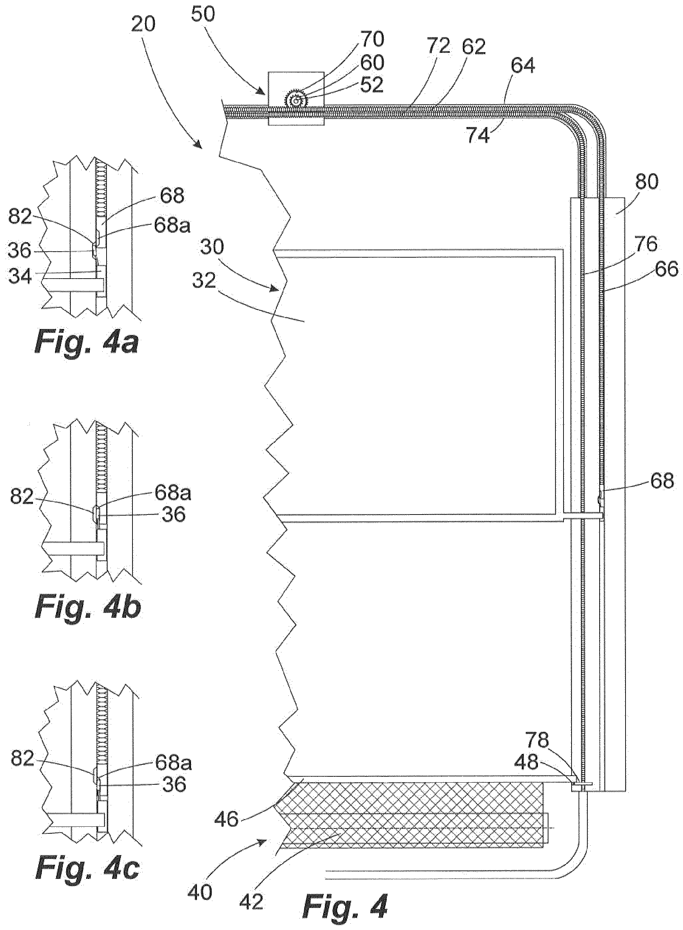

Die fortgesetzte gemeinsame Bewegung der beiden Stränge 62, 72 führt zum Zwischenzustand der Fig. 4. Dieser Zwischenzustand ist dadurch gekennzeichnet, dass die Kopplungseinrichtung 78 im dargestellten Augenblick an einem führungsschienenseitigen Anschlag 48 vorbei fährt, an dem die Auszugstange 46 des Abschattungsrollos 40 zum Anliegen kommt. Die ausgehend von dem Zustand der Fig. 4 fortgesetzte Bewegung des Strangs 72 führt somit nicht mehr zu einer Bewegung des Flächengebildes 44. Fig. 4 zeigt in Hinblick auf die Kopplungseinrichtung 78 daher den Augenblick der Entkopplung.

In etwa gleichzeitig kommt es jedoch in Hinblick auf den Deckel 30 zur Kopplung mit dem Kopplungsschlitten 68. Dieser Kopplungsschlitten 68, der bis zum Erreichen des Zustandes der Fig. 4 ohne nach außen sichtbaren Effekt innerhalb der Führungsnut 66 verlagert wurde, trifft auf einen Mitnehmer 34, der fest mit dem Deckel 30 verbunden ist. Dieser Mitnehmer 34 ist bis zu diesem Zeitpunkt an der in den Fig. 2 bis 4 dargestellten Stelle dadurch festgelegt, dass er über ein federvorgespanntes Kopplungsteil 36 verfügt, welches in der Ausnehmung 82 des Führungsschienenbauteils 80 angeordnet ist. In der in den Figuren 4a bis 4c dargestellten Weise drückt der auf den Mitnehmer 34 treffende Kopplungsschlitten 68 das Kopplungsteil 36 aus der Vertiefung 82 heraus und nimmt das Kopplungsteil 36 stattdessen in einer kopplungsschlittenseitigen Aussparung 68a auf.

Bei der ausgehend vom Zwischenzustand der Fig. 4 fortgesetzten Bewegung werden somit zusammen mit dem Kopplungsschlitten 68 auch der Mitnehmer 34 und damit der Deckel 30 verlagert. Das Ausführungsbeispiel zeigt zur Verdeutlichung eine sehr einfache Kopplung des Deckels 30 an den Mitnehmer 34, bei der diese zueinander ortsfest ausgebildet sind. Es sind jedoch auch komplexere Gestaltungen denkbar, bei denen beispielsweise die Bewegung des Mitnehmers 34 eine überlagerte Bewegung des Deckels 30 verursacht, durch die dieser zeitgleich mit seiner Verlagerung nach hinten auch abgesenkt wird.

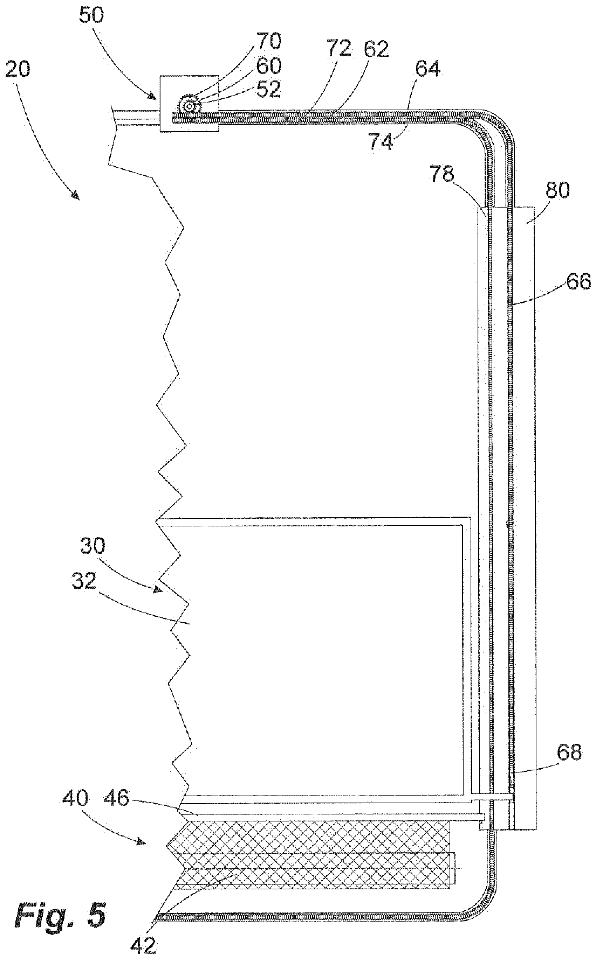

Die Bewegung de Deckels erfolgt, bis die geöffnete Endlage der Fig. 5 erreicht wurde. Somit ist der Endzustand erreicht, in dem der Deckel 30 offen ist und das Abschattungsrollo 40 das Einstrahlen von Sonnenlicht in den Fahrzeuginnenraum nicht mehr unterbindet.

Die entgegengesetzte Ablaufsrichtung erfolgt in der exakt umgekehrten Reihenfolge, wobei zum Übergang vom Zustand der Fig. 5 zum Zustand der Fig. 4 festzustellen ist, dass die Kopplung des Mitnehmers 34 an den Kopplungsschlitten 68 so geartet ist, dass dieser den Deckel auch in Fahrzeuglängsrichtung nach vorne ziehen kann. Erst wenn der Mitnehmer 34 wieder die Position der Fig. 4 erreicht hat, springt das Kopplungsteil 36 aus der Aussparung 68a des Kopplungsschlitten 68 hinaus und in die Vertiefung 82 des Führungsschienenbauteils 80 hinein, so dass bei fortgesetzter Bewegung der Kopplungsschlitten 68 dann wieder ohne von außen sichtbaren Effekt weiter bewegt wird.

Die dargestellte und beschriebe Dachfenstereinheit 20 stellt einen technisch einfachen und kostengünstigen Weg dar, mit nur einem Motor 50 sowohl den Deckel 30 als auch das Abschattungselement 44, 46 der Dachfenstereinheit 20 zu bewegen. Durch die verschiedenen Geschwindigkeiten der Stränge 62, 72 und die das beschriebene Kopplungsverhalten wird die gewünschte asynchrone Bewegung des Deckels 30 und des Abschattungselementes 44, 46 zur Verfügung gestellt. Besonders betont werden soll noch der Vorteil, dass durch die verminderte Geschwindigkeit des Deckelstrangs 62 erreicht wird, dass dessen Kopplungsschlitten 68 sich während des gesamten Ablaufs stets innerhalb der Führungsschiene 66 befindet, obwohl der Abschattungsstrang im gleichen Zeitraum die doppelte Entfernung zurücklegt.

Eingangs ist bereits erwähnt worden, dass die nicht dargestellte linke Seite der Dachfenstereinheit 20 im Wesentlichen mit der dargestellten rechten Seite übereinstimmt. Erwähnenswert ist jedoch noch, dass vorzugsweise zwei zusätzliche Stränge vorgesehen sind, wobei diese mittelbar durch die dargestellten Stränge oder unmittelbar durch die Abtriebswelle 52 des Motors 50 angetrieben werden können. Bei letzterer Gestaltung ist es zweckmäßig, die beiden zusätzlichen Stränge ebenfalls mit den Zahnrädern 60, 70 kämmen zu lassen, sie bezogen auf die Darstellung der Figuren jedoch oberhalb der Zahnräder anzuordnen.

Bei einer nicht dargestellten Ausführungsform der Erfindung sind mehrere, insbesondere zwei bewegliche Deckel vorgesehen. Diese könnten beispielsweise durch einen gemeinsamen Deckelstrang angetrieben werden, der zeitgleich oder zu verschiedenen Zeitpunkten an dem jeweiligen Deck ankoppelt. Auch wäre es möglich, einen zweiten Deckel mittelbar durch einen ersten Deckel zu bewegen, welche seinerseits durch den Deckelstrang angetrieben wird.

## Patentansprüche

1. Dachfenstereinheit (20) für ein Kraftfahrzeug (10) mit
- einer Basisbaueinheit (80) zur ortsfesten Anordnung am Chassis des Kraftfahrzeugs (10),
- einem gegenüber der Basisbaueinheit (80) durch zwei Deckelführungsschienen (66) der Basisbaueinheit (80) geführten Deckel (30), der zwischen einer Schließstellung und einer Öffnungsstellung verlagerbar ist, und
- einem gegenüber der Basisbaueinheit (80) durch zwei Abschattungsführungsschienen (76) geführten Abschattungselement (44, 46), das zwischen einer Funktionsstellung und einer Staustellung verlagerbar ist,
**dadurch gekennzeichnet, dass**
- zur Verlagerung des Deckels (30) zwischen der Schließstellung und der Öffnungsstellung und zur Verlagerung des Abschattungselements (44, 46) zwischen der Funktionsstellung und der Staustellung ein gemeinsamer Antriebsmotor (50) vorgesehen ist und
- in der Deckelführungsschiene (66) ein Deckelstrang (62) zur Bewegung des Deckels (30) und in der Abschattungsführungsschiene (76) ein Abschattungsstrang (72) zur Bewegung des Abschattungselements (44, 46) vorgesehen ist, wobei der Deckelstrang (62) und der Abschattungsstrang (72) derart permanent mit dem gemeinsamen Antriebsmotor (50) gekoppelt sind, dass sie durch diesen gleichzeitig und mit unterschiedlichen Geschwindigkeiten angetrieben werden.

2. Dachfenstereinheit nach Anspruch 1,
**dadurch gekennzeichnet, dass**
der Deckelstrang (62) und der Abschattungsstrang (72) jeweils unmittelbar durch eine gemeinsame Abtriebswelle (52) des Motors oder eines damit verbundenen Getriebes angetrieben werden, wobei vorzugsweise der Deckelstrang (62) und der Abschattungsstrang (72) jeweils als Stränge (62, 72) mit Außenverzahnung ausgebildet sind, die mit zwei an der Abtriebswelle (52) vorgesehenen Zahnrädern (6, 70) verschiedenen Durchmessers kämmen.

3. Dachfenstereinheit nach Anspruch 1 oder 2,
**dadurch gekennzeichnet, dass**
eine erste Kopplungseinrichtung (68, 82) vorgesehen ist, die abhängig von der Position des Deckelstrangs (62) eine Kopplung zwischen dem Deckel (30) und dem Deckelstrang (62) herstellt oder aufhebt.

4. Dachfenstereinheit nach einem der vorstehenden Ansprüche,
**dadurch gekennzeichnet, dass**
eine zweite Kopplungseinrichtung (78) vorgesehen ist, die abhängig von der Position des Abschattungsstrangs (72) eine Kopplung zwischen dem Abschattungselement (44, 46) und dem Abschattungsstrang (72) herstellt oder aufhebt.

5. Dachfenstereinheit nach Anspruch 4,
**dadurch gekennzeichnet, dass**
die erste und die zweite Kopplungseinrichtung (78, 68, 82) derart auf die Bewegungskopplung des Deckelstrangs (62) und des Abschattungsstrangs (72) angepasst sind, dass ausgehend von einer Ausgangslage, in der sich der Deckel (30) im Schließzustand und das Abschattungselement (44, 46) im Funktionszustand befindet, eine Bestromung des Antriebsmotors (50) einen Ablauf verursacht,
- in dessen erster Phase das Abschattungselement (44, 46) an den Abschattungsstrang (72) angekoppelt ist, während der Deckel (30) nicht an den Deckelstrang (62) angekoppelt ist, so dass das Abschattungselement (44, 46) in Richtung seiner Staustellung verlagert wird, während der Deckel (30) in seinem Schließzustand verbleibt, und
- in dessen zweiter Phase der Deckel (30) an den Deckelstrang (62) angekoppelt ist, so dass der Deckel (30) in Richtung seines Öffnungszustandes verlagert wird.

6. Dachfenstereinheit nach Anspruch 4 oder 5,
**dadurch gekennzeichnet, dass**
die erste und/oder die zweite Kopplungseinrichtung (68, 82)
- einen entlang der jeweiligen Führungsschiene (66) geführt beweglichen Kopplungsschlitten (68) aufweist,
- ein entlang der jeweiligen Führungsschiene (66) geführt bewegliches und am Kopplungsschlitten ankoppelbares Mitnehmerteil 34) aufweist, und
- eine Vorrichtung (82) in oder an der jeweiligen Führungsschiene (66) aufweist, an der beim gemeinsamen Überfahren durch Kopplungsschlitten (68) und Mitnehmerteil (34) eine Kopplung oder Entkopplung stattfindet.

7. Dachfenstereinheit nach einem der vorstehenden Ansprüche, **dadurch gekennzeichnet, dass**
- der Deckel (30) zwischen seiner Schließstellung und seiner Öffnungsstellung um eine erste Strecke L1 verlagert wird, die kürzer ist als jene zweite Strecke L2 ist, um die das Abschattungselement (44, 46) zwischen seine Funktionsstellung und seiner Staustellung verlagert wird, und
- der Deckelstrang (62) langsamer als der Abschattungsstrang (72) vom Antriebsmotor (50) angetrieben wird.

8. Dachfenstereinheit nach einem der vorstehenden Ansprüchen,
**dadurch gekennzeichnet, dass**
das Abschattungselement (44, 46) als Abschattungsrollobahn (44) eines Rollosystem (40) ausgebildet ist.

9. Kraftfahrzeug (10) mit einer Dachfenstereinheit (20),
**dadurch gekennzeichnet, dass**
die Dachfenstereinheit (20) nach einem der vorstehenden Ansprüche ausgebildet ist.

## Claims

1. Sunroof unit (20) for a motor vehicle (10) having
- a basic structural unit (80) for stationary arrangement on the chassis of the motor vehicle (10),
- a cover (30) which is guided relative to the basic structural unit (80) by two cover guide rails (66) of the basic structural unit (80) and is displaceable between a closed position and an opened position, and
- a shade element (44, 46) guided relative to the basic structural unit (80) by two shade guide rails (76) and displaceable between a function position and a stowed position,
**characterized in that**
- a common drive motor (50) is provided for displacement of the cover (30) between the closed position and the opened position and for displacement of the shade element (44, 46) between the function position and the stowed position, and
- a cover cable (62) is provided inside the cover guide rail (66) for movement of the cover (30) and a shade element cable (72) in the shade guide rail (76) for movement of the shade element (44, 46), where the cover cable (62) and the shade element cable (72) are permanently coupled to the common drive motor (50) such that they are driven by this drive motor simultaneously and at different speeds.

2. Sunroof unit according to claim 1, **characterized in that** the cover cable (62) and the shade element cable (72) are each driven directly by a common output shaft (52) of the motor or of a gear unit connected thereto, where preferably the cover cable (62) and the shade element cable (72) are each designed as cables (62, 72) with external toothing that mesh with two gear wheels (60, 70) of different diameter provided on the output shaft (52).

3. Sunroof unit according to claim 1 or 2, **characterized in that** a first coupling device (68, 82) is provided which, depending on the position of the cover cable (62), makes or breaks a coupling between the cover (30) and the cover cable (62).

4. Sunroof unit according to one of the preceding claims, **characterized in that** a second coupling device (78) is provided which, depending on the position of the shade element cable (72), makes or breaks a coupling between the shade element (44, 46) and the shade element cable (72).

5. Sunroof unit according to Claim 4, **characterized in that** the first and the second coupling device (78, 68, 82) are matched to the coupled movement of the cover cable (62) and of the shade element cable (72) such that starting from an initial position in which the cover (30) is in the closed state and the shade element (44, 46) in the function state, a current supplied to the drive motor (50) causes a sequence,
- in the first phase of which the shade element (44, 46) is coupled to the shade element cable (72) while the cover (30) is not coupled to the cover cable (62), so that the shade element (44, 46) is displaced in the direction of its stowed position while the cover (30) remains in its closed position, and
- in the second phase of which the cover (30) is coupled to the cover cable (62) such that the cover (30) is displaced in the direction of its opened state.

6. Sunroof unit according to claim 4 or 5, **characterized in that** the first and/or the second coupling device (68, 82)
- has a movable coupling slide (68) guided along the respective guide rail (66),
- has a movable catch part (34) guided along the respective guide rail (66) and able to be coupled to the coupling slide, and
- has a device (82) in or on the respective guide rail (66) at which coupling or decoupling takes place when it is jointly overrun by the coupling slide (68) and catch part (34).

7. Sunroof unit according to one of the preceding claims, **characterized in that**
- the cover (30) is displaced between its closed position and its opened position by a first distance L1 which is shorter than the second distance L2 by which the shade element (44, 46) is displaced between its function position and its stowed position, and
- the cover cable (62) is driven by the drive motor (50) more slowly than the shade element cable (72).

8. Sunroof unit according to one of the preceding claims, **characterized in that** the shade element (44, 46) is designed as a shading roller blind web (44) of a roller blind system (40).

9. Motor vehicle (10) having a sunroof unit (20), **characterized in that** the sunroof unit (20) is designed according to one of the preceding claims.

## Revendications

1. Ensemble de fenêtre de toit (20) pour un véhicule automobile (10), comprenant
- une unité structurelle de base (80) pour l'arrangement stationnaire sur le châssis du véhicule automobile (10),
- un couvercle (30) guidé par rapport à l'unité structurelle de base (80) au moyen de deux rails de guidage de couvercle (66) de l'unité structurelle de base (80) et déplaçable entre une position fermée et une position ouverte, et
- un élément d'ombrage (44, 46) guidé par rapport à l'unité structurelle de base (80) au moyen de deux rails de guidage d'ombrage (76) et déplaçable entre une position fonctionnelle et une position rentrée,
**caractérisé en ce que**
- un moteur d'entraînement (50) commun est prévu pour déplacer le couvercle (30) entre la position fermée et la position ouverte et pour déplacer l'élément d'ombrage (44, 46) entre la position fonctionnelle et la position rentrée, et
- une corde de couvercle (62) pour actionner le couvercle (30) est prévue dans le rail de guidage de couvercle (66) et une corde d'ombrage (72) pour actionner l'élément d'ombrage (44, 46) est prévue dans le rail de guidage d'ombrage (76), la corde de couvercle (62) et la corde d'ombrage (72) étant couplées au moteur d'entraînement (50) commun en permanence de telle manière qu'elles soient entraînées par celui-ci simultanément et à des vitesses différentes.

2. Ensemble de fenêtre de toit selon la revendication 1, **caractérisé en ce que** la corde de couvercle (62) et la corde d'ombrage (72) respectivement soient, entraînées directement par un arbre entraîné (52) commun du moteur ou par une transmission y connectée, de préférence la corde de couvercle (62) et la corde d'ombrage (72) respectivement étant conçues sous forme de cordes (62, 72) à denture extérieure s'engrenant avec deux roues dentées (6, 70) de diamètres différents prévues sur l'arbre entraîné (52).

3. Ensemble de fenêtre de toit selon la revendication 1 ou 2, **caractérisé en ce qu'**un premier dispositif de couplage (68, 82) est prévu pour établir ou libérer un couplage entre le couvercle (30) et la corde de couvercle (62) en fonction de la position de la corde de couvercle (62).

4. Ensemble de fenêtre de toit selon l'une quelconque des revendications précédentes, **caractérisé en ce qu'**un deuxième dispositif de couplage (78) est prévu pour établir ou libérer un couplage entre l'élément d'ombrage (44, 46) et la corde d'ombrage (72) en fonction de la position de la corde d'ombrage (72).

5. Ensemble de fenêtre de toit selon la revendication 4, **caractérisé en ce que** le premier et le deuxième dispositif de couplage (78, 68, 82) sont adaptés au couplage de mouvement de la corde de couvercle (62) et de la corde d'ombrage (72) de telle manière qu'à partir d'une situation initiale, dans laquelle le couvercle (30) se trouve dans une position fermée et l'élément d'ombrage (44, 46) se trouve dans une position fonctionnelle, une alimentation électrique du moteur d'entraînement (50) cause une séquence, dans laquelle
- dans une première phase l'élément d'ombrage (44, 46) est couplé à la corde d'ombrage (72), tandis que le couvercle (30) n'est pas couplé à la corde de couvercle (62) de sorte que l'élément d'ombrage (44, 46) soit déplacé en direction vers sa position rentrée, tandis que le couvercle (30) reste dans sa condition fermée, et
- dans une deuxième phase le couvercle (30) est couplé à la corde de couvercle (62) de sorte que le couvercle (30) soit déplacé en direction vers sa condition ouverte.

6. Ensemble de fenêtre de toit selon la revendication 4 ou 5, **caractérisé en ce que** le premier et/ou le deuxième dispositif de couplage (68, 82) comprennent/comprend
- un chariot de couplage mobile (68) guidé le long du rail de guidage (66) respectif,
- une partie de prise mobile (34) guidée le long du rail de guidage (66) respectif et pour coupler au chariot de couplage, et
- un dispositif (82) dans ou sur le rail de guidage (66) respectif, au niveau duquel un couplage ou découplage a lieu pendant une traversée commune par chariot de couplage (68) et partie de prise (34).

7. Ensemble de fenêtre de toit selon l'une quelconque des revendications précédentes, **caractérisé en ce que**
- le couvercle (30) soit déplacé entre sa position fermée et sa position ouverte le long d'une première distance L1, qui est plus courte que une deuxième distance L2 le long de laquelle l'élément d'ombrage (44, 46) soit déplacé entre sa position fonctionnelle et sa position rentrée, et
- la corde de couvercle (62) soit entraînée par le moteur d'entraînement (50) plus lentement que la corde d'ombrage (72).

8. Ensemble de fenêtre de toit selon l'une quelconque des revendications précédentes, **caractérisé en ce que** l'élément d'ombrage (44, 46) est conçu sous forme de volet roulant d'ombrage (44) d'un système de store (40).

9. Véhicule automobile (10) avec un ensemble de fenêtre de toit (20), **caractérisé en ce que** l'ensemble de fenêtre de toit (20) est conçu selon l'une quelconque des revendications précédentes.
